# EUROPÄISCHE PATENTSCHRIFT

(11) **EP 2 163 128 B1**
(45) Veröffentlichungstag und Bekanntmachung des Hinweises auf die Patenterteilung: **08.04.2015**
(21) Anmeldenummer: 08784592.1
(22) Anmeldetag: 02.07.2008
(51) Int. Cl.: H05B 3/00, B29C 49/68

(54) **VORRICHTUNG ZUM ERWÄRMEN VON VORFORMLINGEN**
APPARATUS FOR HEATING PREFORMS
DISPOSITIF DE CHAUFFAGE D'ÉBAUCHES

(30) Priorität: 04.07.2007 DE 102007031210
(43) Veröffentlichungstag der Anmeldung: 17.03.2010
(73) Patentinhaber: Krones AG, 93073 Neutraubling (DE)
(72) Erfinder: STOIBER, Christian, 93185 Michelsneukirchen (DE); SCHÖNBERGER, Wolfgang, 93179 Brennberg (DE)
(74) Vertreter: Reichert & Lindner Partnerschaft Patentanwälte
(86) Internationale Anmeldenummer: PCT/EP2008/005380
(87) Internationale Veröffentlichungsnummer: WO 2009/003687

(56) Entgegenhaltungen:
- WO-A-01/49075
- WO-A-01/62463
- DE-U1-202005 020 252
- FR-A- 2 863 932
- GB-A- 2 156 732

## Beschreibung

Die Erfindung betrifft eine Vorrichtung zum Erwärmen von Vorformlingen aus Kunststoff nach dem Oberbegriff des Anspruchs 1.

Ferner betrifft die Erfindung ein Verfahren zum Erwärmen von Vorformlingen.

Solche Vorrichtungen werden bei der Herstellung von Kunststoffgegenständen eingesetzt, bei denen diese Gegenstände durch Umformung von Vorformlingen erzeugt werden. Dazu ist es erforderlich, die Vorformlinge vor einem Umformvorgang zu erwärmen. Beispielsweise werden solche Vorrichtungen und Verfahren beim Herstellen von Kunststoffflaschen verwendet, die durch Aufblasen von zuvor erwärmten Vorformlingen erzeugt werden.

Solche Vorrichtungen zum Herstellen von Hohlkörpern, wie z.B. Getränkeflaschen, sind aus dem Stand der Technik hinlänglich bekannt. So zeigt z.B. die WO 01/49075 A1 einen Infrarotofen zur Erwärmung von Kunststoffvorformlingen, die später zu Flaschen ausgeformt werden. Dabei werden die Vorformlinge an Infrarotstrahlern vorbeigeführt und dadurch erwärmt. Da sehr viele Kunststoffe (z.B. PET) die Eigenschaft besitzen, an der Außenoberfläche schneller warm zu werden, als an der Innenoberfläche, ist es nötig, während des Erwärmungsvorgangs einen Temperaturausgleich zu schaffen. Deshalb ist es notwendig, den Vorformling während des Erwärmungsvorgangs mit Kühlluft zu beaufschlagen, damit die Außenoberfläche des Vorformlings während des Durchwärmungsvorgangs nicht zu heiß wird, was eine Kristallisation der Oberfläche und damit eine Unbrauchbarkeit des Vorformlings zur Folge hätte. Außerdem ist es notwendig, besonders den Mündungsbereich des Vorformlings zu kühlen, da sich dieser nur sehr wenig erwärmen darf, um einen späteren korrekten Sitz der Verschlüsse auf der Mündung zu gewährleisten.

Die internationale Patentanmeldung WO 01/62463 A1 offenbart eine Einrichtung zum Erwärmen von Preforms. Die Einrichtung umfasst eine Vielzahl von länglichen Infrarotstrahlern, die mit einem Reflektor versehen sind. Der Reflektor dient dazu, eine möglichst parallele Infrarotstrahlung auf die an der Heizeinrichtung vorbeilaufenden Preforms zu richten. Um eine zu starke Erwärmung des Mündungsbereichs des Preforms zu vermeiden, ist eine Abschirmung der Infrarotstrahlung vorgesehen. Ferner ist lediglich zur Kühlung des gesamten inneren Bereichs der Heizeinrichtung ein Ventilator vorgesehen. Die Kühlung einzelner Bereiche des Preforms und einzelner, ausgewählter Bereiche der Heizeinrichtung ist nicht vorgesehen.

Die Patentanmeldung FR 2 863 932 A1 offenbart einen Ofen zum Erhitzen von Preforms. Der Ofen umfasst einen Tunnel, der durch zwei parallele Wände begrenzt ist. Eine Wand umfasst dabei eine Vielzahl von Infrarotheizstrahlern, die den Preform erhitzen. Eine andere Wand umfasst eine Vielzahl von Öffnungen, durch welche Luft durchtreten kann, die von einem Gebläse angetrieben wird. Die Luft tritt durch die Wand in den Tunnel ein. Das Gebläse umfasst zwei Ventilatoren, die zum einen Luft auf den Teil der Preforms richtet, der sich im Innern des Tunnels befindet. Ein anderer Teil der Luftströmung wird auf den zweiten Teil des Preforms gerichtet, der sich außerhalb des Tunnels befindet.

Die WO 01/49075 A1 zeigt also ein Lüfterrad 22, durch das Kühlluft in Richtung des Vorformlings und der Infrarotlampen geleitet wird. Außerdem wird die gleiche Kühlluft dazu verwendet, den Mündungsbereich des Vorformlings zu kühlen.

Diese Vorrichtung hat den Nachteil, dass die Kühlung des Mündungsbereichs des Vorformlings nicht genau eingestellt werden kann, da sie vom eingestellten Volumen- bzw. Massenstrom an Kühlluft für den Rumpfbereich des Vorformlings abhängt. Da die Kühlung der Oberfläche des Rumpfbereichs des Vorformlings Priorität hat, richtet sich die Einstellung des Kühlluftvolumenstromes nach den optimalen Parametern zur Kühlung des Rumpfes. Es kann also hier vorkommen, dass der Mündungsbereich zu wenig gekühlt wird, was zu einer Unbrauchbarkeit des Vorformlings führen würde, oder dass der Mündungsbereich zu viel gekühlt wird, was zu einem zu hohen Luftverbrauch der Vorrichtung führen würde, was einen unwirtschaftlichen Betrieb der Anlage darstellt.

Es ist deshalb Aufgabe der vorliegenden Erfindung, eine Vorrichtung Verfahren bereitzustellen, bei dem die Kühlung des Vorformlings in der Erwärmungseinrichtung bzw. die Kühlung der Infrarotstrahler der Vorrichtung optimal eingestellt werden kann, um somit einen effizienten Betrieb zu ermöglichen.

Die Aufgabe bezüglich der Vorrichtung wird gelöst durch die Merkmale des Anspruchs 1.

Es ist ebenso Aufgabe der vorliegenden Erfindung, eine Vorrichtung bzw. ein Verfahren bereitzustellen, bei dem die Kühlung des Vorformlings in der Erwärmungseinrichtung bzw. die Kühlung der Infrarotstrahler der Vorrichtung optimal eingestellt werden kann, um somit einen effizienten Betrieb zu ermöglichen.

Die Aufgabe bezüglich des Verfahrens wird gelöst durch die Merkmale des Anspruchs 12.

Die Vorrichtung betrifft vorzugsweise einen Ofen zum Erwärmen von Vorformlingen aus Kunststoff, wobei diese Vorformlinge vorzugsweise aus PET ausgestaltet sind und zu

Flaschen ausgeformt werden. Die spätere Ausformung zu Flaschen erfolgt vorzugsweise durch einen Streckblasvorgang. Zum Erwärmen der Vorformlinge werden sie mit gleichmäßiger Geschwindigkeit an Heizkästen vorbeigeführt, wobei die Heizkästen mehrere Infrarotstrahler aufweisen, die bezüglich ihrer Längsachse vorzugsweise senkrecht zur Längsachse der Vorformlinge angeordnet sind und wobei mehrere Infrarotstrahler übereinander in Richtung der Längsachse der Vorformlinge angeordnet sind. Diese Anordnung hat den Vorteil, dass über die Höhe des Vorformlings ein Wärmeprofil eingebracht werden kann. Die Vorformlinge werden vorzugsweise mit gleichmäßiger Geschwindigkeit äquidistant an den Heizkästen vorbeigeführt. Der Transport der Vorformlinge wird vorzugsweise so vorgenommen, dass sie auf Haltedornen aufgebracht sind, die ihrerseits wiederum an Kettengliedern befestigt sind, wobei viele Kettenglieder eine Kette bilden, die im endlosen Umlauf durch die Vorrichtung läuft. Es ist aber auch denkbar, dass die Vorformlinge mit einer Klammer an ihrem Hals durch die Vorrichtung transportiert werden. Es wird jedoch der Transport mittels eines Haltedorns bevorzugt, wobei sich der nicht zu erwärmende Bereich des Vorformlings oberhalb eines Kühlschildes befindet. Bevorzugterweise weist die Vorrichtung drei voneinander getrennte Luftzuführungen auf, wobei die erste Luftzuführung so angeordnet ist, dass die Luft im Bereich der Mündung des Vorformlings in Richtung der Infrarotstrahler des Heizkastens geblasen wird. Die zweite Luftzuführung ist vorzugsweise so angebracht, dass die Kühlluft über die Oberfläche des Rumpfes des Vorformlings streichen kann, wobei auch die zweite Luftzuführung so angeordnet ist, dass die Kühlluft nach der Kühlung der Oberfläche des Vorformlings im Bereich des Heizkastens ankommt. Eine dritte Kühlluftzuführung ist vorzugsweise so angeordnet, dass die Enden der Infrarotstrahler, die auf Grund der hohen Leistung dieser sehr warm werden können, gekühlt werden. Dabei ist die Luftzuführung vorzugsweise so angebracht, dass nur die Enden der Infrarotstrahler gekühlt werden, nicht jedoch die strahlaktiven Bereiche der Strahler.

Die Vorrichtung weise einen Einlauf und einen Auslauf auf, wobei der Ein- und der Auslauf vorzugsweise nebeneinander angebracht sind, was bedeutet, dass der Weg der Vorformlinge durch die Vorrichtung vorzugsweise eine in etwa U-förmige Bahn beschreibt, wobei sich zumindest bereichsweise in den geraden Abschnitten des Transportweges in der Vorrichtung Heizkästen befinden. Der Auslauf der Vorrichtung ist mit einer nachgeordneten Maschine, z.B. einer Streckblasmaschine zum Herstellen von Flaschen verbunden.

Die Vorrichtung ist vorzugsweise so angeordnet, dass zumindest die erste und die zweite Luftzuführung innerhalb der beiden Schenkel des U-förmigen Transportweges angebracht sind und die Luftauslässe die Kühlluft jeweils in Richtung eines Schenkels des Transportweges blasen. Die beschriebenen Schenkel des U-förmigen Transportweges sind im Weiteren als Transportstränge bezeichnet. Die beiden Transportstränge werden durch eine Umlenkung verbunden.

Vorzugsweise weist der Heizkasten einen Freiraum auf, der mit einem Kamin verbunden ist und durch den somit die Kühlluft des Luftauslasses 1, des Luftauflasses 2 und des Luftauslasses 3 abgeführt werden kann. Gemäß einer bevorzugten Weiterbildung der Erfindung wird mindestens ein Kühlluftstrom so stark beschleunigt, dass er beim Ankommen im Bereich des Kamins noch so viel Energie aufweist, um die beiden anderen Luftströme mitzureißen.

Vorzugsweise sind die Heizkästen in einem Heizkastenträger angeordnet, der in mindestens zwei Stellungen (eine Betriebsstellung und eine Wartungsstellung verschwenkt werden kann. Die Verschwenkung der Heizkastenträger erfolgt in etwa in Richtung der Kühlluftströmung des ersten und zweiten Luftauslasses.

Die Vorrichtung zur Erwärmung von Vorformlingen ist vorzugsweise modulartig aufgebaut, so dass es insgesamt drei verschiedene Module (Abschnitte) gibt. Der erste Abschnitt umfasst dabei den Ein- bzw. Auslauf der Vorrichtung, der zweite Abschnitt umfasst ein Mittelteil der Vorrichtung, der dritte Abschnitt umfasst das Endteil der Vorrichtung, das die Umlenkung umfasst. Eine Vorrichtung zum Erwärmen von Vorformlingen ist daher mindestens aus drei Abschnitten, nämlich dem Anfangsabschnitt mit Ein- und Auslauf, dem Zwischenabschnitt und dem Endabschnitt gebildet. Durch diesen Aufbau ist es problemlos möglich, eine beliebige Konfiguration von Vorrichtungen zum Erwärmen von Vorformlingen zu erstellen, da zwischen dem Anfangsabschnitt und dem Endabschnitt beliebig viele Zwischenabschnitte eingefügt werden können. Gemäß einer bevorzugten Weiterbildung der Erfindung weist jeder Abschnitt jeweils eine erste, eine zweite und eine dritte Luftzuführung, einen ersten, einen zweiten und einen dritten Luftauslass, sowie mindestens einen Heizkasten, vorzugsweise jedoch zwei Heizkästen auf.

Das erfindungsgemäße Verfahren zur Erwärmung von Vorformlingen zeichnet sich vorzugsweise dadurch aus, dass die drei Kühlluftströme der drei Luftzuführungen einzeln gesteuert und geregelt werden können. Es ist also möglich, jeden einzelnen Kühlprozess, also den der Rumpfkühlung, der Mündungskühlung und der Kühlung der Infrarotstrahlerenden einzeln zu steuern und / oder zu regeln. Es können also die optimalen Parameter (z.B. Temperaturen) für den Betrieb der Anlage eingestellt werden. Vorzugsweise werden die Kühlluftströme nach der Kühlung der jeweiligen Bereiche in einen gemeinsamen Kamin geführt, von wo aus sie abtransportiert und vorzugsweise aus der Maschine geführt werden. Gemäß einer bevorzugten Weiterbildung der Erfindung werden die Kühlluftströme der ersten Luftzuführung und der zweiten Luftzuführung in etwa senkrecht zum ersten und zweiten Transportstrang geführt.

Bevorzugte Ausführungsformen und Weiterbildungen der Erfindung werden in den Figuren beschrieben.

Dabei zeigen:
- Fig. 1:: eine Draufsicht auf eine Anlage zum Herstellen von Kunststoffhohlkörpern,
- Fig. 2:: einen Querschnitt durch eine Vorrichtung zum Erwärmen von Vorformlingen,
- Fig. 3:: eine Detailansicht der Luftzuführungen im unteren Bereich der Vorrichtung,
- Fig. 4:: eine Detailansicht des Querschnittes durch die Vorrichtung gemäß Fig. 2,
- Fig. 5:: eine isometrische Ansicht eines Heizkastens einer Vorrichtung zum Erwärmen von Vorformlingen und
- Fig. 6:: eine Draufsicht auf einen Heizkasten gemäß Fig. 4.

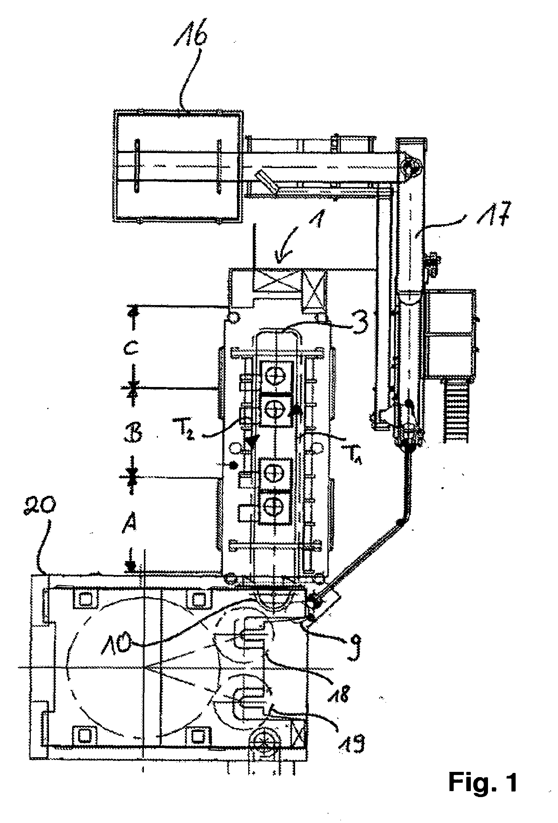

Fig. 1 zeigt eine Vorrichtung zum Herstellen von Kunststoffhohlkörpern aus erwärmten Vorformlingen (nicht dargestellt), wobei die Vorformlinge in einer Speichereinrichtung 16 in einer Vielzahl gespeichert und über eine Vereinzelungseinheit 17 und einem Einlauf 9 einer Vorrichtung 1 zum Erwärmen der Vorformlinge zugeführt wird. In der Vorrichtung 1 durchlaufen die Vorformlinge eine in etwa U-Förmige Erwärmungsstrecke bis zum Auslauf 10, wo sie an einen Einlaufstern 18 der Blasmaschine 20 übergeben werden. Nachdem die erwärmten Vorformlinge mittels Druckluft zu einem Behälter aufgeblasen wurden, werden sie einem Auslaufstern 19 der Blasmaschine 20 und von dort aus an eine nachfolgende Maschine, wie z.B. einen Luftförderer, eine Etikettiermaschine oder einen Füller übergeben.

Die Vorrichtung 1 zum Erwärmen der Vorformlinge ist modular aufgebaut, was bedeutet, dass verschiedene funktionelle Einheiten bestehen, die in beliebiger Reihenfolge aneinander geschaltet werden können. So ist die Vorrichtung 1 z.B. in drei verschiedene Abschnitte A, B und C unterteilt, wobei der Abschnitt A den vorderen Teil der Anlage darstellt, der auch den Einlauf 9 und den Auslauf 10 umfasst. Der Teil C bildet das Endstück der Vorrichtung 1 mit einer Umlenkung 3, die die beiden geraden Transportstränge T1 und T2 miteinander verbindet, während der Teil B das Mittelstück der Vorrichtung 1 bildet. Die Vorrichtung 1 besteht also immer aus einem Abschnitt A, einem Abschnitt C sowie mindestens einem Abschnitt B, wobei hier nahezu beliebig viele Abschnitte zwischen A und C verbaut werden können. Dieser Modulare Aufbau hat den Vorteil, dass zu jeder Leistungsklasse an Blasmaschinen 20 eine optimale Größe der Vorrichtung 1 zum Erwärmen bereitgestellt werden kann.

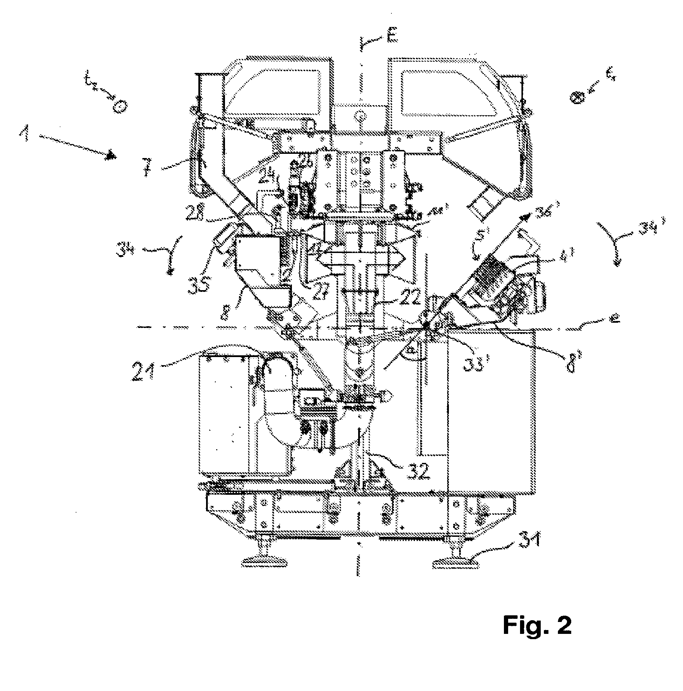

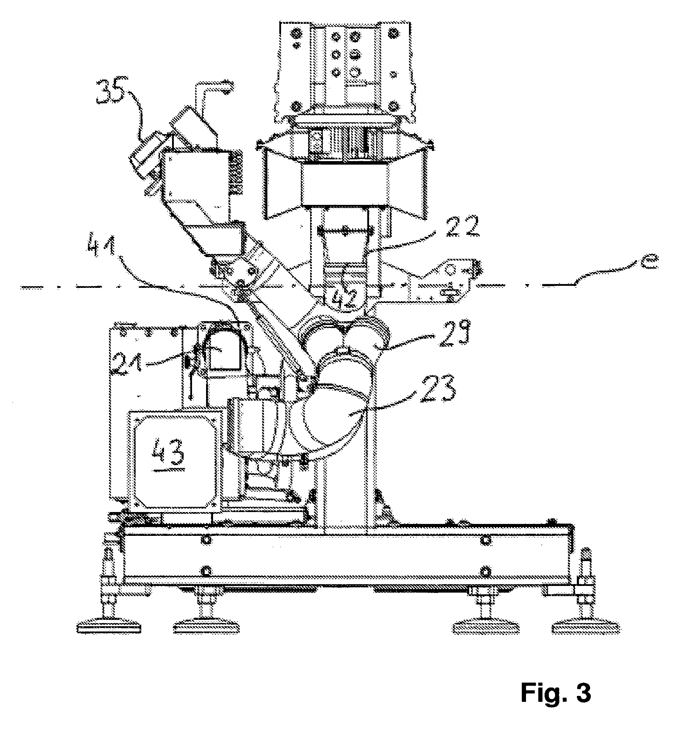

Fig. 2 zeigt einen Querschnitt der Vorrichtung 1 zum Erwärmen von Vorformlingen 2. Die Vorrichtung 1 ist dabei gegenüber einem Aufstellungsort mit Füssen 31 abgestützt. Ein zentrales Traggestell 32 ist vorhanden, um die zur Erwärmung wichtigen Bestandteile abzustützen und genau justieren zu können. Die Vorrichtung 1 ist im oberen Teil über der horizontalen Trennebene e, der die zur Erwärmung relevanten Bauteile, wie z.B. Heizkasten und Luftauslässe 11, 12, 13 umfasst, bezüglich der vertikalen Trennebene E symmetrisch aufgebaut. Auf der rechten Seite befindet sich der Transportstrang T1, der eine Transportrichtung t1 aufweist, auf der linken Seite befindet sich der Transportstrang T2, der eine Transportrichtung t2 aufweist. Der Übersichtlichkeit halber sind bestimmte Details jeweils nur auf einer Seite der der vertikalen Trennebene E dargestellt, die Beschreibung bezieht sich jedoch auf beide Seiten. Zur Kenntlichmachung sind für die Bauteile auf der linken Seite normale Bezugszeichen "X", für die Bauteile auf der rechten Seite Zahlen "X"' verwendet worden. Es ist ein Kettenglied 26 zu sehen, an dem ein Haltedorn 24 sowie der Haltedorn 24, an dem ein Kühlschild 27 für Vorformlinge 2 befestigt ist. Der Grundaufbau der Luftführung in der Vorrichtung 1 ist so gestaltet, dass die Luftansaugstellen der Luftzuführungen 21, 22, und 23 (siehe Figur 3) unterhalb oder in der Nähe der horizontalen Trennebene e liegen. Die Führung der Kühlluft zu den Luftauslässen 11, 12 und 13 erfolgt im Bereich der vertikalen Trennebene E bzw. des Traggestells 32 im Wesentlichen senkrecht nach oben. Die Luftzuführungen 21, 22, 23 weisen jeweils ein Rohr mit in den Figuren nicht dargestellten angetriebenen Lufträdern zum Erzeugen eines Luftstroms auf. Außerdem ist vor den Lufträdern jeweils ein ebenfalls nicht gezeigter Luftfilter vorgeschaltet. Die erste Luftzuführung 21 saugt Luft für die Gewindekühlung des Vorformlings 2, die zweite Luftzuführung 22 saugt Luft für die Rumpfkühlung des Vorformlings 2 und die dritte Luftzuführung 23 saugt Luft für die Strahlerendenkühlung an. Jede Luftzuführung 21, 22 und 23 weist an der Kühlluftausgangsseite einen Luftauslass 11, 12 und 13 auf. Der Luftauslass 11 zur Kühlung des Gewindes des Vorformlings 2 weist eine Trichterform auf und wird in Richtung des Luftaustritts immer enger. Damit ist eine sehr genaue Positionierung des Luftstrahls im Gewindebereich des Vorformlings 2 möglich. Durch diese Verengung ist es auch möglich, durch einen hohen Volumenstrom eine relativ starke Strömung zu erzeugen, die auch zum Abtransport der Kühlluft zur Rumpf- und Strahlerendenkühlung verwendet wird. Die Kühlluft wird so umgelenkt, dass sie am Luftauslass 11 senkrecht zur Transportrichtung t1 oberhalb des Kühlschildes 27 gegen den Mündungsbereich bzw. Gewindebereich des Vorformlings 2 gedrückt wird. In Strömungsrichtung nach dem Mündungsbereich des Vorformlings 2 umspült die Kühlluft noch die Gewindestrahlerabdeckung 28, die eine Aufwärmung der oberen Maschinenteile, wie z.B. der Kettenglieder 26 verhindert. In Strömungsrichtung nach der Umspülung der Gewindestrahlerabdeckung 28 wird die Kühlluft in den Kamin 7 gedrückt. Der Kamin 7 ist innerhalb der Maschinenverkleidung der Vorrichtung 1 angebracht und führt die gesammelte und inzwischen warme Kühlluft nach oben in die Umgebung ab.

Der Luftauslass 12 zur Kühlung des Rumpfes ist direkt unterhalb des Luftauslasses 11 angebracht. Der Luftauslass 12 wird in Strömungsrichtung weiter und ist ebenfalls so angebracht, dass die Kühlluft im Wesentlichen senkrecht zur Transportrichtung t1 gegen den Vorformling 2 gedrückt wird. Durch die Durchmesservergrößerung des Luftauslasses 12 wird hier eine wesentlich kleinere Strömungsgeschwindigkeit der Kühlluft erreicht, als bei der Kühlluft der Gewindekühlung. Der Luftauslass 12 ist in Strömungsrichtung an seinem Ende mit Reflektoren 25 versehen, die die von den Infrarotstrahlern 5 in Richtung des Vorformlings 2 geschickte Strahlung reflektieren. Die Reflektoren 25 sind dabei als Kacheln ausgebildet, zwischen denen ein Spalt entsteht, durch den die Kühlluft hindurch treten kann.

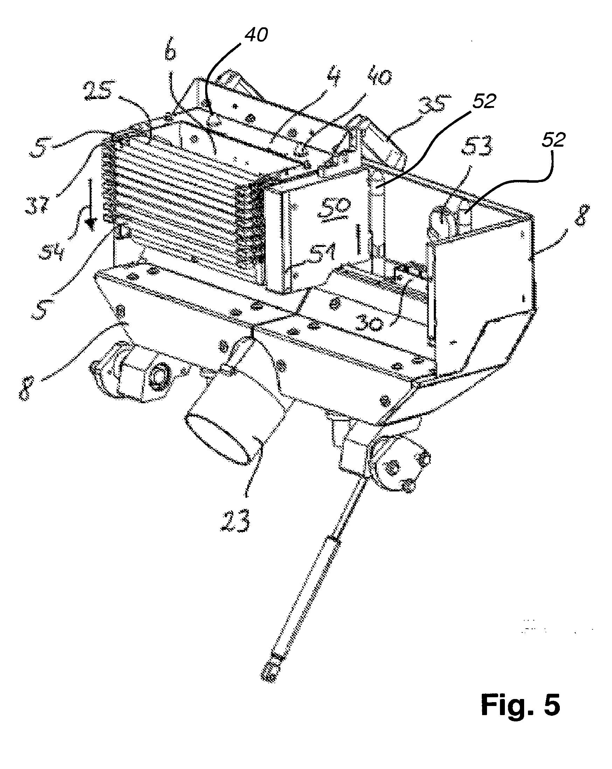

In Strömungsrichtung nach der Umspülung des Rumpfes des Vorformlings 2 trifft die inzwischen etwas erwärmte Luft auf die Heizstrahler und dann auf die stromab nach den Heizstrahlern angebrachten Reflektoren 25 (siehe Fig. 5), die vorzugsweise ebenfalls als Reflektorkacheln ausgebildet sind. Die Kühlluft wird an den Reflektoren senkrecht nach unten abgelenkt und am unteren Ende des Heizkastens 4 wieder in die ursprüngliche Strömungsrichtung in den Heizkasten 4 umgelenkt. Dort angekommen wird sie durch den von der Gewindekühlluft erzeugten Sog durch den Freiraum 6 (siehe Figur 5) mitgerissen und über den Kamin 7 in die Umgebung abgeführt.

Der Heizkasten 4 ist mit seinen Infrarotstrahlern 5 in einem Heizkastenträger 8 angebracht. Der Heizkastenträger 8 kann um eine Achse 33 in Richtung des Pfeils 34 nach außen verschwenkt werden. Durch diese Verschwenkung ist für das Bedienpersonal der Vorrichtung 1 eine gute Zugänglichkeit geschaffen, sodass z.B. überprüft werden kann, ob Strahler ausgefallen sind. Außerdem kann so ein leichter Wechsel der Heizkästen 4 vorgenommen werden. Dazu braucht der Heizkasten 4 nur entriegelt und an seinen Griffen 35 in Richtung des Pfeils 36 herausgezogen zu werden.

Figur 3 zeigt eine bezüglich der Luftzuführung detaillierte Ansicht der Vorrichtung gemäß Fig. 2. Es ist hier auch die dritte Luftzuführung 23 mit ihrer dritten Ansaugstelle 43 zu sehen. Von der Ansaugstelle 43 wird die Luft über das Rohr bis hin zu einem Hosenrohr 29 geführt, wo der Kühlluftstrom auf die linke und die rechte Hälfte der Vorrichtung 1 aufgeteilt wird. Die Kühlluft wird hier schräg nach oben umgelenkt, um in Richtung des Heizkastens 4 und dort in Richtung der Strahlerendenhalter 37 gelenkt zu werden.

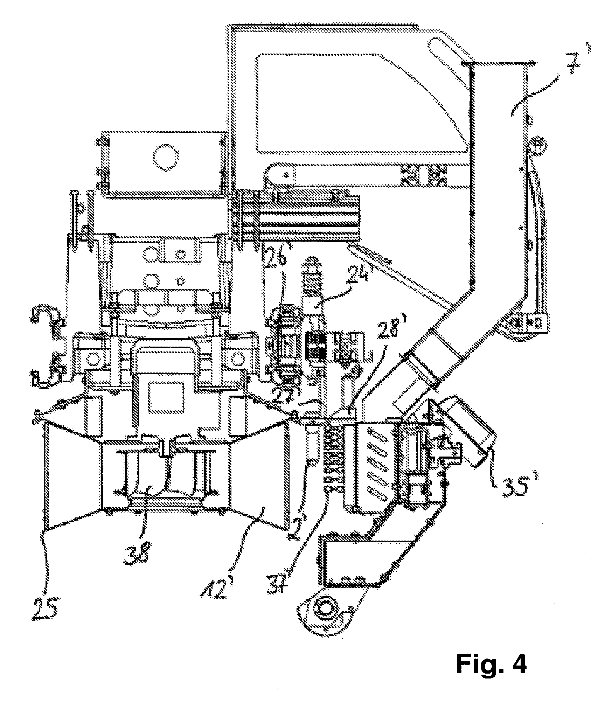

Fig. 4 zeigt eine detaillierte Ansicht der oberen Hälfte der Vorrichtung 1. Hier ist die erste Luftzuführung 21 mit dem zweiten Luftauslass 12, 12' zu sehen, wobei die Luft durch das Lüfterrad 38 beschleunigt und in Richtung des zweiten Luftauslasses 12, 12' gedrückt wird.

Fig. 5 zeigt zwei Heizkastenträger 8, wobei sich im linken Heizkastenträger 8 ein Heizkasten 4 befindet. Der Heizkasten 4 weist Infrarotstrahler 5, Strahlerendenhalter 37, einen Reflektor 25, einen Freiraum 6, Griffe 35, einen nicht sichtbaren elektrischen Stecker sowie zwei Dornaufnahmen 40 auf. Außerdem ist die dritte Luftzuführung 23 im Bereich des Heizkastenträgers 8 zu sehen, von wo aus die Luft in den Kühlquader 50 geleitet wird. Der Kühlquader 50 weist an seinen beiden Seitenflächen jeweils eine Luftauslassleiste 51 auf, die die Kühlluft genau gegen die Strahlerendenhalter 37 drückt. Der Kühlquader 50 befindet sich immer links und rechts am Ende eines Heizkastenträgers 8. Nach der Kühlung der Strahlendenhalter 37 wird die Kühlluft - genauso wie die Kühlluft der Rumpfkühlung - entlang des Reflektors 25 in Richtung des Pfeils 54 nach unten gedrückt, wo sie dann über die Leitschräge (nicht dargestellt) in den Freiraum 6 und von dort aus in den Kamin 7 (siehe Figur 4) strömt.

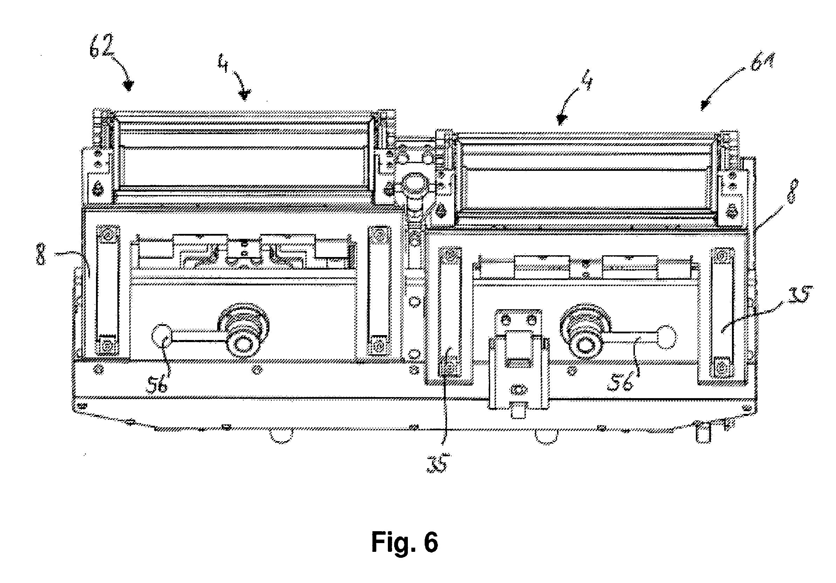

Der Heizkastenträger 8 weist einen elektrischen Anschlusskontakt 30 auf der im Wirkverbund mit einem nicht dargestellten elektrischen Stecker des Heizkastens 4 zusammenwirkt. Außerdem weist der Heizkastenträger 8 zwei Dorne 52 auf, die mit den Dornaufnahmen 40 des Heizkastens 4 zusammenwirken kann. Befindet sich der Heizkasten 4 im Heizkastenträger 8, so wird eine Wirkverbindung und eine Sicherung durch die Betätigung eines Arretiermechanismus 53 hergestellt. Der Arretiermechanismus 53 wird von Außen durch einen Hebel 56 (siehe Figur 6) betätigt. Dazu wird ein Heizkasten 4 an seinen Griffen 35 genommen und so platziert, dass die Dorne 52 in die Dornaufnahmen 40 eintreten. Alsdann wird der Heizkasten 4 abgesenkt, wobei er vor der Endstellung stehen bleibt, da dann ein Nocken (nicht dargestellt) am Arretiermechanismus 53 anliegt. Der Arretiermechanismus 53 weist eine Spirale auf, die durch Drehung (Betätigung des Hebels 56) den Nocken nach unten drückt und damit den elektrischen Stecker 39 in den elektrischen Anschlusskontakt 30 einführt und sichert. Fig. 6 zeigt zwei Positionen von Heizkästen 4, nämlich in eingerasteter Stellung 61 und loser Stellung 62. In eingerasteter Stellung ist der Hebel 56 nach rechts gedrückt und somit der Arretiermechanismus 53 betätigt, während der Hebel in loser Stellung 62 des Heizkastens 4 links ist. Die lose Stellung 62 ist auch dadurch zu erkennen, dass der linke Heizkasten 4 weiter aus dem Heizkastenträger 8 ragt, als der rechte Heizkasten 4.

## Patentansprüche

1. Vorrichtung (1) zum Erwärmen von Vorformlingen (2) aus Kunststoff, die eine Mündung und einem Rumpf aufweisen, mittels Infrarotstrahlung, wobei die Vorformlinge (2) mit gleichmäßiger Geschwindigkeit vorbei an Heizkästen (4), die mehrere Infrarotstrahler (5) aufnehmen, durch die Vorrichtung (1) führbar sind, **dadurch gekennzeichnet, dass** zumindest drei getrennte Luftzuführungen (21, 22, 23) vorhanden sind, wobei die erste Luftzuführung (21) während der Erwärmung zur Kühlung der Mündung der Vorformlinge (2), die zweite Luftzuführung (22) während der Erwärmung zur Kühlung des Rumpfes der Vorformlinge (2) und die dritte Luftzuführung (23) zur Kühlung der Enden der Infrarotstrahler (5) vorgesehen ist, und dass ein Luftstrom in den einzelnen Luftzuführungen (21, 22, 23) getrennt regelbar bzw. steuerbar ist.

2. Vorrichtung (1) nach Anspruch 1, wobei die Vorrichtung (1) einen Einlauf (9) und einen Auslauf (10) aufweist, wobei der Einlauf (9) mit einer Vereinzelungseinheit (17) und der Auslauf (10) mit einer Blasmaschine (20) verbunden sind.

3. Vorrichtung (1) nach Anspruch 2, **dadurch gekennzeichnet, dass** sie mindestens eine Umlenkung, (3) aufweist, die die Vorformlinge (2) vom Einlauf (9) zum Auslauf (10) mindestens einmal durchlaufen.

4. Vorrichtung (1) nach einem der Ansprüche 1 bis 4, wobei die Vorformlinge (2) im Wesentlichen linear durch die Vorrichtung (1) transportierbar sind.

5. Vorrichtung (1) nach den Ansprüchen 2 bis 4, wobei zwei Transportstränge (T1, T2) vorhanden sind, wobei der erste Transportstrang (T1) vom Einlauf (9) der Vorrichtung (1) bis zur Umlenkung (3) und der zweite Transportstrang (T2) von der Umlenkung (3) bis zum Auslauf (10) der Vorrichtung (1) reicht.

6. Vorrichtung (1) nach Ansprüchen 1 bis 5, wobei die erste Luftzuführung (21) mindestens einen ersten Luftauslass (11) zwischen dem ersten Transportstrang (T1) und dem zweiten Transportstrang (T2) aufweist, durch den Kühlluft in Richtung der Mündungen der Vorformlinge (2) leitbar ist, dass zweite Luftzuführung (22) mindestens einen zweiten Luftauslass (12) zwischen dem ersten Transportstrang (T1) und dem zweiten Transportstrang (T2) aufweist, durch den Kühlluft in Richtung der Rümpfe der Vorformlinge (2) leitbar ist und dass die dritte Luftzuführung (23) einen dritten Luftauslass (13) aufweist, durch den Kühlluft in Richtung der Enden der Infrarotstrahler (5) leitbar ist.

7. Vorrichtung (1) nach wenigstens einem der vorhergehenden Ansprüche, wobei der Heizkasten (4) einen Freiraum (6) aufweist, durch den Kühlluft abführbar ist, und dass ein Kamin (7) vorhanden ist, der die Kühlluft aus der Vorrichtung (1) in die Umgebung führt und wobei der Kamin (7) derart angeordnet ist, dass die Kühlluft aller Luftzuführungen (21, 22, 23) abführbar ist.

8. Vorrichtung (1) nach wenigstens einem der vorhergehenden Ansprüche, wobei die Vorrichtung in drei Abschnitte (A,B,C) unterteilt ist, wobei der erste Abschnitt (A) den Einlauf (9) der Vorrichtung (1) umfasst, der zweite Abschnitt (B) das Mittelstück der Vorrichtung (1) umfasst und der dritte Abschnitt (C) den Auslauf (10) der Vorrichtung (1) umfasst und wobei die Vorrichtung immer aus dem ersten Abschnitt (A), dem dritten Abschnitt (C) und mindestens einem zweiten Abschnitt (B) besteht.

9. Vorrichtung (1) nach Anspruch 8, wobei jeder Abschnitt (A, B, C) eine erste Luftzuführung (21), eine zweite Luftzuführung (22) sowie eine dritte Luftzuführung (23), einen ersten Luftauslass (12), einen zweiten Luftauslass (11), einen dritten Luftauslass (13) sowie mindestens einen Heizkasten (4) umfasst.

10. Vorrichtung (1) nach Anspruch 1, wobei die Heizkästen (4) mindestens eine Betriebsstellung (14) sowie eine Wartungsstellung (15) aufweisen, wobei die Wartungsstellung (15) um einen Schwenkwinkel (a) zur jeweils näher gelegenen Außenseite der Vorrichtung (1) verschwenkt ist.

11. Vorrichtung (1) nach einem der Ansprüche 1 bis 10, wobei sich in Strömungsrichtung des ersten und zweiten Kühlluftstromes vor den Vorformlingen (2) und hinter den Infrarotstrahlern (5) Reflektoren (25) befinden.

12. Verfahren zum Erwärmen von Vorformlingen (2) aus Kunststoff mit einer Mündung und einem Rumpf mittels Infrarotstrahlung, gekennzeichnet durch die folgenden Schritte:
• dass die Vorformlinge (2) mit gleichmäßiger Geschwindigkeit vorbei an Heizkästen (4), die mehrere Infrarotstrahler (5) aufnehmen, durch die Vorrichtung (1) geführt werden;
• dass mindestens drei getrennte Luftzuführungen (21, 22, 23) vorgesehen werden;
• dass die Vorformlinge (2) während der Erwärmung über die zweite Luftzuführung (22) zumindest bereichsweise am Rumpf aktiv gekühlt werden;
• dass die Infrarotstrahler (5) zumindest an deren Enden über die dritte Luftzuführung (23) durch Luft aktiv gekühlt werden;
• dass die Mündung der Vorformlinge (2) über die erste Luftzuführung (21) durch Luft aktiv gekühlt werden; und
• dass die Luftströme in den drei getrennten Luftzuführungen (21, 22, 23) zur Kühlung getrennt geregelt bzw. gesteuert werden.

13. Verfahren nach Anspruch 12, wobei die Abführung der Kühlluftströme nach der jeweiligen Kühlung gemeinsam über einen Kamin (7) erfolgt.

14. Verfahren nach einem der Ansprüche 12 bis 13, **dadurch gekennzeichnet, dass** der erste und der zweite Kühlluftstrom jeweils etwa senkrecht auf den ersten und den zweiten Transportstrang (T1, T2) gerichtet werden.

## Claims

1. An apparatus (1) for heating preforms (2) made of plastic, having an orifice and a body, by means of infrared radiation, wherein the preforms (2) can be guided through the apparatus (1) at constant speed past heating boxes (4) which accommodate several infrared radiators (5), **characterized in that** at least three separate air supplies (21, 22, 23) are provided, wherein the first air supply (21) is provided during the heating for cooling the orifice of the preforms (2), the second air supply (22) is provided during heating for cooling the body of the preforms (2), and the third air supply (23) is provided for cooling the ends of the infrared radiators (5), and an air stream can be regulated or controlled separately in the individual air supplies (21, 22, 23).

2. An apparatus (1) according to claim 1, wherein the apparatus (1) comprises an inlet (9) and an outlet (10), wherein the inlet (9) is connected to a separation unit (17) and the outlet (10) is connected to a blowing machine (20).

3. An apparatus (1) according to claim 2, **characterized in that** it comprises at least one redirection means (3) which is passed by the preforms (2) at least once from the inlet (9) to the outlet (10).

4. An apparatus (1) according to one of the claims 1 to 4, wherein the preforms (2) can be transported substantially linearly through the apparatus (1).

5. An apparatus (1) according to one of the claims 2 to 4, wherein two transport lines (T1, T2) are present, wherein the first transport line (T1) reaches from the inlet (9) of the apparatus (1) up to the redirection means (3) and the second transport line (T2) from the redirection means (3) up to the outlet (10) of the apparatus (1).

6. An apparatus (1) according to one of the claims 1 to 5, wherein the first air supply (21) comprises at least one first air outlet (11) between the first transport line (T1) and the second transport line (T2), through which cooling air can be guided in the direction of the orifices of the preforms (2), the second air supply (22) comprises at least one second air outlet (12) between the first transport line (T1) and the second transport line (T2), through which cooling air can be guided in the direction of the bodies of the preforms (2), and the third air supply (23) comprises a third air outlet (13) through which the cooling air can be guided in the direction towards the ends of the infrared radiators (5).

7. An apparatus (1) according to one of the preceding claims, wherein the heating box (4) comprises a free space (6) through which the cooling air can be discharged, and a flue (7) is present which guides the cooling air from the apparatus (1) to the ambient environment, and wherein the flue (7) is arranged in such a way that the cooling air of all air supplies (21, 22, 23) can be discharged.

8. An apparatus (1) according to one of the preceding claims, wherein the apparatus is divided into three sections (A, B, C), wherein the first section (A) comprises the inlet (9) of the apparatus (1), the second section (B) comprises the middle element of the apparatus (1), and the third section (C) comprises the outlet (10) of the apparatus (1), and wherein the apparatus always consists of the first section (A), the third section (C) and at least one second section (B).

9. An apparatus (1) according to claim 8, wherein each section (A, B, C) comprises a first air supply (21), a second air supply (22), and a third air supply (23), a first air outlet (12), a second air outlet (11), and a third air outlet (13), and at least one heating box (4).

10. An apparatus (1) according to claim 1, wherein the heating boxes (4) have at least one operating position (14) and a maintenance position (15), wherein the maintenance position (15) is pivoted about a pivoting angle (a) towards the respectively closer situated exterior side of the apparatus (1).

11. An apparatus (1) according to one of the claims 1 to 10, wherein reflectors (25) are situated before the preforms (2) and after the infrared radiators (5) in the direction of flow of the first and second cooling air stream.

12. A method for heating preforms (2) made of plastic, having an orifice and a body, by means of infrared radiation, **characterized by** the following steps:
- that the preforms (2) are guided through the apparatus (1) at constant speed past heating boxes (4) which accommodate several infrared radiators (5);
- that at least three separate air supplies (21, 22, 23) are provided;
- that the preforms (2) are actively cooled during the heating via the second air supply (22) at least in sections on the body;
- that the infrared radiators (5) are actively cooled by air at least at their ends by the third air supply (23);
- that the orifices of the preforms (2) are actively cooled by air via the first air supply (21); and
- that the air flows are separately regulated or controlled in the three separate air supplies (21, 22, 23) for cooling.

13. A method according to claim 12, wherein the discharge of the cooling air flows after the respective cooling occurs jointly via a flue (7).

14. A method according to one of the claims 12 to 13, **characterized in that** the first and the second cooling air flow are respectively directed approximately vertically to the first and second transport line (T1, T2).

## Revendications

1. Dispositif (1) pour chauffer des préformes (2) en matière plastique ayant une embouchure et un corps au moyen d'un rayonnement infrarouge, dans lequel les préformes (2) peuvent être amenées à travers le dispositif (1) à une vitesse constante, devant des caissons chauffants (4) contenant plusieurs radiateurs à infrarouges (5), **caractérisé en ce qu'**il existe au moins trois arrivées d'air (21, 22, 23) séparées, la première arrivée d'air (21) étant prévue pendant le chauffage pour refroidir l'embouchure des préformes (2), la deuxième arrivée d'air (22) pendant le chauffage pour refroidir le corps des préformes (2) et la troisième arrivée d'air (23) pour refroidir les extrémités des radiateurs à infrarouges (5), et **en ce qu'**un flux d'air dans les différentes arrivées d'air (21, 22, 23) peut être régulé ou contrôlé séparément.

2. Dispositif (1) selon la revendication 1, lequel dispositif (1) présente une entrée (9) et une sortie (10), l'entrée (9) étant reliée à une unité de séparation (17) et la sortie (10) à une machine à souffler (20).

3. Dispositif (1) selon la revendication 2, **caractérisé en ce qu'**il comporte au moins une déviation (3) par laquelle les préformes (2) passent au moins une fois entre l'entrée (9) et la sortie (10).

4. Dispositif (1) selon l'une des revendications 1 à 4, dans lequel les préformes (2) peuvent être transportées à travers le dispositif (1) de façon sensiblement linéaire.

5. Dispositif (1) selon l'une des revendications 2 à 4, dans lequel il existe deux trajets de transport (T1, T2), le premier trajet de transport (T1) allant de l'entrée (9) du dispositif (1) à la déviation (3) et le deuxième trajet de transport (T2) de la déviation (3) à la sortie (10) du dispositif (1).

6. Dispositif (1) selon l'une des revendications 1 à 5, dans lequel la première arrivée d'air (21) comporte au moins une première sortie d'air (11) entre le premier trajet de transport (T1) et le deuxième trajet de transport (T2), qui dirige de l'air de refroidissement vers les embouchures des préformes (2), la deuxième arrivée d'air (22) comporte au moins une deuxième sortie d'air (12) entre le premier trajet de transport (T1) et le deuxième trajet de transport (T2), qui dirige l'air de refroidissement vers les corps des préformes (2), et la troisième arrivée d'air (23) comporte une troisième sortie d'air (13) qui dirige l'air de refroidissement vers les extrémités des radiateurs à infrarouges (5).

7. Dispositif (1) selon l'une au moins des revendications précédentes, dans lequel le caisson chauffant (4) présente un espace libre (6) à travers lequel l'air de refroidissement peut être extrémité, et en ce qu'il est prévu une cheminée (7) qui achemine l'air de refroidissement hors du dispositif (1) dans l'environnement, la cheminée (7) étant disposée de façon à pouvoir extraire l'air de refroidissement de toutes les arrivées d'air (21, 22, 23).

8. Dispositif (1) selon l'une au moins des revendications précédentes, lequel dispositif est divisé en trois sections (A, B, C), la première section (A) incluant l'entrée (9) du dispositif (1), la deuxième section (B) la partie médiane du dispositif (1) et la troisième section (C) la sortie (10) du dispositif (1) et lequel dispositif se compose toujours de la première section (A), de la troisième section (C) et d'au moins une deuxième section (B).

9. Dispositif (1) selon la revendication 8, dans lequel chaque section (A, B, C) comprend une première arrivée d'air (21), une deuxième arrivée d'air (22) et une troisième arrivée d'air (23), une première sortie d'air (12), une deuxième sortie d'air (11), une troisième sortie d'air (13) et au moins un caisson chauffant (4).

10. Dispositif (1) selon la revendication 1, dans lequel les caissons chauffants (4) présentent au moins une position de service (14) et une position de maintenance (15), la position de maintenance (15) étant décalée selon un angle de pivotement (a) par rapport au côté extérieur le plus proche du dispositif (1).

11. Dispositif (1) selon l'une des revendications 1 à 10, dans lequel des réflecteurs (25) sont placés en amont des préformes (2) et en aval des radiateurs à infrarouges (5) dans le sens d'écoulement du premier flux d'air de refroidissement et du deuxième flux d'air de refroidissement.

12. Procédé pour chauffer des préformes (2) en matière plastique ayant une embouchure et un corps au moyen d'un rayonnement infrarouge, **caractérisé en ce qu'**il comprend les étapes suivantes :
• les préformes (2) sont amenées à travers le dispositif (1) à une vitesse constante, devant des caissons chauffants (4) contenant plusieurs radiateurs à infrarouges (5) ;
• il est prévu au moins trois arrivées d'air (21, 22, 23) séparées ;
• les préformes (2) sont refroidies activement au moins par zones au niveau du corps par la deuxième arrivée d'air (22) pendant le chauffage ;
• les radiateurs à infrarouges (5) sont refroidis activement à l'air, au moins à leurs extrémités, par la troisième arrivée d'air (23) ;
• les embouchures des préformes (2) sont refroidies activement à l'air par la première arrivée d'air (21) ; et
• les flux d'air des trois arrivées d'air (21, 22, 23) séparées peuvent être régulés ou contrôlés séparément en vue du refroidissement.

13. Procédé selon la revendication 12, dans lequel les flux d'air de refroidissement sont extraits ensemble après chaque refroidissement via une cheminée (7).

14. Procédé selon l'une des revendications 12 à 13, **caractérisé en ce que** le premier flux d'air de refroidissement et le deuxième flux d'air de refroidissement sont dirigés à peu près perpendiculairement au premier trajet de transport (T1) et au deuxième trajet de transport (T2).
